(19) Europäisches Patentamt / European Patent Office / Office européen des brevets

(11) **EP 2 076 735 B1**

(12) **FASCICULE DE BREVET EUROPEEN**

(45) Date de publication et mention
de la délivrance du brevet:
**14.11.2018 Bulletin 2018/46**

(21) Numéro de dépôt: **07820651.3**

(22) Date de dépôt: **27.09.2007**

(51) Int Cl.:
***G01C 21/34*** *(2006.01)*

(86) Numéro de dépôt international:
**PCT/EP2007/060263**

(87) Numéro de publication internationale:
**WO 2008/037768 (03.04.2008 Gazette 2008/14)**

(54) **PROCEDE DE DETERMINATION D'ITINERAIRE ROUTIER BASÉ SUR UNE PRÉDÉTERMINATION DE LA CONSOMMATION DE CARBURANT EN FONCTION DES CARACTERISTIQUES DE LA ROUTE**

VERFAHREN ZUR BESTIMMUNG EINER FAHRROUTE DERGESTALT DAS, AUF EINE VORBESTIMMUNG DES KRAFTSTOFFVERBRAUCHS GEMÄSS DEN EIGENSCHAFTEN DER ROUTE BASIERT

METHOD OF DETERMINING A DRIVING ROUTE BASED ON PREDETERMINING THE FUEL CONSUMPTION ACCORDING TO THE CHARACTERISTICS OF THE ROUTE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **29.09.2006 FR 0608581**

(43) Date de publication de la demande:
**08.07.2009 Bulletin 2009/28**

(73) Titulaire: **Société de Technologie Michelin**
**63000 Clermont-Ferrand (FR)**

(72) Inventeurs:
• **RAYNAUD, Michel**
**94120 Fontenay-Sous-Bois (FR)**
• **LEGRAND, Christophe**
**78330 Fontenay Le Fleury (FR)**

(74) Mandataire: **Bauvir, Jacques**
**Manufacture Française des**
**Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 1 593 937   DE-A1-102004 024 259**
**JP-A- 2000 002 553   US-A- 5 568 390**
**US-A- 5 742 922   US-A- 5 913 917**
**US-A1- 2005 055 157**

**Description**

La présente invention concerne un procédé de détermination d'un itinéraire à faible consommation pour système de réseau routier numérique stocké sur un support mémoire et comportant une pluralité de tronçons et d'indications de positionnement de ces tronçons, lesdits tronçons étant susceptibles d'être agencés dans une reconstitution d'un réseau routier de façon à former des portions de routes et des carrefours, ledit procédé permettant de déterminer au moins un itinéraire potentiel susceptible de relier un point de départ D, et un point d'arrivée A à l'aide d'étapes consistant notamment à :

-identifier une pluralité de routes potentielles à partir desquelles l'itinéraire dont la valorisation résultante en fonction des indices de poids est optimale est susceptible d'être élu ;

-ledit procédé étant susceptible de prendre en compte un certain nombre de paramètres permettant d'établir un itinéraire à faible consommation.

Dans le cadre des spécifications techniques détaillées associées à leurs produits, les constructeurs automobiles établissent des valeurs de consommations moyennes pour les véhicules, généralement en cycle urbain, en cycle mixte et sur autoroute.

Ces données sont certes utiles afin, par exemple, de comparer entre eux certains véhicules. Par contre, ces mêmes données comportent d'importantes limites pour une utilisation dans le but d'estimer les consommations réelles sur un parcours donné, ou pour aider à sélectionner un parcours spécifique en fonction de la consommation. En effet, l'approximation la plus grossière de la quantité de carburant consommée sur un tronçon consiste à multiplier la longueur du tronçon par la valeur de consommation moyenne donnée par le constructeur pour le type de voie correspondant au tronçon considéré. Cette approximation n'est pas satisfaisante car elle ne prend pas en compte les caractéristiques propres à ce tronçon particulier, mais uniquement une moyenne de celles généralement rencontrées sur ce type de voie. Selon une telle approche, c'est la distance parcourue qui a le plus d'impact sur la consommation de carburant. L'itinéraire le moins cher est donc souvent très proche de la ligne droite, sans prendre en compte des facteurs souvent très pénalisants tels que la densité de la circulation en zone urbaine par exemple.

De plus, les constructeurs effectuent souvent les mesures de consommation dans des conditions très favorables. En pratique, les consommations mesurées dans les conditions d'utilisation courante d'un conducteur moyen sont souvent supérieures aux valeurs théoriques annoncées.

L'utilisation des valeurs théoriques annoncées pour prévoir la consommation réelle d'un véhicule sur un long trajet peut donc s'avérer hasardeuse et générer des résultats éloignés de la réalité. De même, l'utilisation de telles données pour effectuer les calculs d'itinéraires visant à privilégier une route à faible consommation peut également engendrer des résultats erronés.

Par ailleurs, en usage courant, la consommation d'un véhicule est susceptible de varier considérablement pendant un trajet, par exemple, en fonction du type de route. A l'heure actuelle, le seul moyen de connaître précisément la consommation d'un véhicule sur un trajet donné consiste à effectuer une mesure sur route avec ledit véhicule. Une telle pratique est très contraignante si on souhaite évaluer et comparer différents itinéraires potentiels avant le départ. Les coûts de carburant devenant de plus en plus important, il serait utile de disposer de moyens d'évaluation efficaces et fiables. Le document US5568390 décrit un système de navigation intégré à un véhicule capable de prévoir un itinéraire prenant en compte le trafic routier et la distance qui pourra être parcourue avec le carburant présent dans le véhicule. Le document US5913917 décrit une méthode et un appareil pour prédire la consommation de carburant et l'énergie consommée par le véhicule pour un trajet choisi parmi une pluralité de trajets possibles. La consommation est estimée pour chaque section de route en fonction de variables relatives à la route, au véhicule et au conducteur. Le document JP2000002553 décrit un système capable de proposer un trajet minimisant le coût du carburant utilisé afin de se rendre à un point d'arrivé donné en collectant des informations tels que la vitesse légale sur le tronçon de route, les paramètres du véhicule incluant le ratio de consommation de carburant et en calculant l'estimation de consommation de carburant sur une pluralité de routes possibles.

Afin d'éviter ses différents inconvénients, et en particulier afin de déterminer des itinéraires dont la consommation correspondante en fonction du véhicule est optimisée, il est proposé un procédé de détermination d'un itinéraire à faible consommation ItiFC pour système de réseau routier numérique stocké sur un support mémoire, tel que dans la revendication 1, comportant une pluralité de tronçons et d'indications de positionnement de ces tronçons, lesdits tronçons étant susceptibles d'être agencés dans une reconstitution d'un réseau routier de façon à former des portions de routes et des carrefours, ledit procédé permettant de déterminer au moins un itinéraire potentiel Itipot, susceptible de relier un point de départ D, et un point d'arrivée A, ledit itinéraire étant constitué de tronçons et éventuellement de noeuds, lesdits tronçons reliant lesdits noeuds :

- ledit procédé comprenant les étapes consistant à:

  - identifier une pluralité de routes potentielles Rpot à partir desquelles un itinéraire est susceptible d'être élu en fonction de critères de sélection de route donnés, chaque route potentielle étant constituée d'un ensemble de tronçons comportant chacun un indice de poids dont la valeur dépend du niveau de pénalisation apporté par ledit tronçon dans la constitution de l'itinéraire en fonction desdits critères ;

- élire, parmi l'ensemble des routes potentielles Rpot, l'itinéraire dont la valorisation résultante en fonction des indices de poids est optimale ;
- ledit procédé comportant en outre une étape consistant à déterminer la consommation de carburant d'un véhicule routier à l'aide de moyens de calculs en fonction de donnée correspondant aux caractéristiques techniques du véhicule, à des mesures de consommation effectuées sur une pluralité de véhicules types, et à des caractéristiques physiques des tronçons de l'itinéraire ;

ladite étape consistant à déterminer la consommation de carburant d'un véhicule routier comporte trois étapes intermédiaires :
la première étape intermédiaire consistant à déterminer à l'aide de moyens de calculs la consommation moyenne à vitesse stabilisée Cstab établie d'une part à l'aide de données de consommation théoriques et d'autre part de données obtenues par des mesures de consommation à différentes vitesses stabilisées, ladite consommation à vitesse stabilisée étant établie en fonction de la vitesse moyenne de circulation VMC sur un tronçon donné ;

- la seconde étape intermédiaire consistant à déterminer un coefficient de pénalisation locale $P(t,v)$ affectant la vitesse réelle V sur un tronçon t ;
- la troisième étape intermédiaire consistant à déterminer à l'aide de moyens de calcul la consommation corrigée Ccor en fonction de la longueur du tronçon concerné lt, de la consommation à vitesse stabilisée sur ce tronçon Cstab, et du coefficient de pénalisation locale $P(t,v)$ pour ce tronçon ;
- ledit coefficient de pénalisation prenant en compte l'ensemble des paramètres physiques suivants :

  - le niveau d'importance de la localité traversée de sorte que plus la localité est grande, plus la consommation augmente ;
  - la signalisation, de sorte que la consommation augmente avec le nombre de feux et de stops ;
  - la possibilité de doubler les véhicules lents, de sorte que la présence de zones de dépassement diminue la consommation ;
  - la sinuosité de la route, de sorte que la consommation augmente avec la sinuosité ;
  - la déclivité, de sorte que la consommation augmente avec la déclivité ;
  - les limitations ponctuelles de vitesse, de sorte que les variations de limites de vitesse augmentent la consommation ;
  - le type de revêtement, de sorte que la consommation augmente sur une route non revêtue ou en mauvais état ;

lesdites étapes intermédiaires étant effectuées pour chaque tronçon t de chaque route potentielle Rpot pendant le calcul d'itinéraire, la donnée obtenue de consommation corrigée Ccorr étant utilisée pour affecter à chaque tronçon ledit indice de poids correspondant à l'impact de ce tronçon sur la consommation du véhicule, de façon à obtenir, lors de l'étape consistant à élire l'itinéraire résultant, un itinéraire à faible consommation ItiFC prenant en compte la consommation corrigée Ccorr.

Grâce aux caractéristiques de l'invention, il est possible d'établir un itinéraire en prenant réellement en compte d'une part l'impact du type de véhicule, mais aussi l'impact du type de route tant au niveau général qu'au niveau local, c'est-à-dire au niveau de chaque tronçon. Un calcul aussi précis permet d'atteindre des niveaux de précision sans commune mesure avec les techniques connues à ce jour. D'autre part, le temps de calcul nécessaire pour définir l'itinéraire n'est pas fortement pénalisé puisque les modes classiques de détermination d'itinéraire utilisés impliquent déjà de réaliser des itérations au niveau des tronçons.

Selon un mode de réalisation avantageux, afin de déterminer un itinéraire potentiel Itipot, on identifie une pluralité de routes potentielles Rpot à partir desquelles un itinéraire est élu en fonction de critères donnés, l'identification de la pluralité de routes étant effectuée par exploration des noeuds et/ou des tronçons à partir d'un premier élément de modélisation donné par un utilisateur, jusqu'à ce que ladite pluralité de routes passe par un second élément de modélisation sélectionné par l'utilisateur.

Selon un autre mode de réalisation avantageux, afin de déterminer un itinéraire potentiel Itipot, on identifie une pluralité de routes potentielles Rpot à partir desquelles un itinéraire est élu en fonction de critères donnés, l'identification de la pluralité de routes étant effectuée par exploration des noeuds et/ou des tronçons en sélectionnant un premier élément de modélisation du réseau routier, de préférence un noeud, à proximité du point de départ (D), et un second élément de modélisation du réseau routier, de préférence un noeud, à proximité du point d'arrivée (A), en identifiant une pluralité de routes, chacune consistant en une pluralité d'éléments de route reliés du premier élément au second

3

élément, et en recherchant au moins un élément intermédiaire pour chacune desdites routes dans ledit ensemble d'éléments de modélisation de réseau routier.

L'étape de l'exploration peut être réalisée de différentes façons, par exemple à l'aide de l'algorithme de Dijkstra. On peut également utiliser l'algorithme A*, qui est une variante de l'algorithme de Dijkstra, ou encore l'algorithme de FORD, ou d'autres algorithmes permettant d'explorer et de comparer les différentes routes possibles, en fonction de critères de sélection pré-établis ou à fournir par l'utilisateur.

Selon un mode de réalisation avantageux, la vitesse moyenne de circulation VMC est déterminée à l'aide de moyens de calculs en fonction de la limite légale de vitesse LLV et des caractéristiques générales de la voie CG.

Il s'agit d'un premier aspect permettant de prendre en compte l'impact sur la consommation de la réalité physique et géographique présente effectivement sur la route établie.

De manière préférentielle, la consommation moyenne à vitesse stabilisée d'un véhicule donné est déterminée en affectant un coefficient de correction de véhicule COEFVE aux données théoriques de consommation DTC du véhicule, ledit coefficient étant obtenu grâce à des mesures préalables de consommation effectuées à vitesse stabilisée.

De manière préférentielle, le calcul de consommations à vitesse stabilisée permet d'établir un tableau de consommations moyennes à vitesse stabilisé, la consommation moyenne à vitesse stabilisée Cstab étant déterminée en affectant à la valeur de vitesse moyenne de circulation déterminée la valeur correspondante la plus proche disponible dans ledit tableau de consommations moyennes.

Le coefficient de pénalisation p(t,v) est avantageusement déterminé à partir d'au moins un paramètre local de tronçon. Selon diverses variantes, ce coefficient peut être obtenu en combinant plusieurs paramètres, comme par exemple une ou plusieurs caractérisriques locales de voie, et/ou une ou plusieurs caractéristiques générales de voie, et/ou la limite légale de vitesse.

L'utilisation d'un coefficient de pénalisation impliquant les mulitples facteurs d'influence d'ordre physique, plutôt qu'une simple prise en compte des limitations de vitesse affichées, permet d'obtenir des données de consommation beaucoup plus réalistes qui peuvent avoir un impact déterminant sur le choix d'une portion ou de la totalité d'un itinéraire.

Le coefficient de pénalisation p(t,v) intègre de préférence une pluralité de facteurs d'influence d'ordre physique dont le niveau d'importance du tronçon.

La consommation corrigée CCOR d'un véhicule sur un tronçon t est de préférence définie par la relation :

$$c_{cor}(t,v) = \frac{l(t)}{100} \times c_{stab}(v, s_m(t,v)) \times p(t,v)$$

Où:

- $l(t)$ est la longueur en kilomètres du tronçon $t$
- $c_{stab}(v, s)$ est la consommation en litres par 100km du véhicule $v$ à la vitesse stabilisée connue la plus proche de $s$,
- $s_m(t, v)$ est la vitesse moyenne en km/h au véhicule $v$ sur le tronçon $t$
- $p(t,v)$ est le coefficient de pénalisation de la consommation pour le véhicule $v$ sur le tronçon $t$

L'invention prévoit par ailleurs un logiciel comprenant des éléments de code programmés pour la mise en oeuvre du procédé préalablement présenté, lorsque ledit logiciel est chargé dans un système informatique et exécuté par ledit système informatique. Ce logiciel peut être sous forme de produit enregistré sur un support lisible par un système informatique, comprenant des éléments de code programmés.

Un exemple prévoit enfin un procédé de détermination d'un itinéraire à faible consommation ItiFC pour système de réseau routier numérique stocké sur un support mémoire et comportant une pluralité de tronçons et d'indications de positionnement de ces tronçons, lesdits tronçons étant susceptibles d'être agencés dans une reconstitution d'un réseau routier de façon à former des portions de routes et des carrefours, ledit procédé permettant de déterminer au moins deux itinéraires potentiels Itipot, susceptibles de relier un point de départ D, et un point d'arrivée A, lesdits itinéraires étant constitués de tronçons et éventuellement de noeuds, lesdits tronçons reliant lesdits noeuds ;

- ledit procédé comprenant les étapes consistant à:

  - identifier une pluralité de routes potentielles Rpot à partir desquelles un itinéraire est susceptible d'être élu en fonction de critères de sélection de route donnés, chaque route potentielle étant constituée d'un ensemble de tronçons comportant chacun un indice de poids dont la valeur dépend du niveau de pénalisation apporté par ledit tronçon dans la constitution de l'itinéraire en fonction desdits critères ;
  - élire, parmi l'ensemble des routes potentielles Rpot, au moins deux itinéraires dont les valorisations résultantes en fonction des indices de poids sont sensiblement optimales ;

- ledit procédé comportant en outre une étape consistant à déterminer la consommation de carburant d'un véhicule routier à l'aide de moyens de calculs en fonction:

  - de données correspondant aux caractéristiques techniques du véhicule ;
  - de données correspondant à des caractéristiques physiques des tronçons de l'itinéraire;

- ladite étape consistant à déterminer la consommation de carburant d'un véhicule routier comportant une première étape intermédiaire consistant à déterminer à l'aide de moyens de calculs la consommation moyenne à vitesse stabilisée Cstab établie en fonction de la vitesse moyenne de circulation VMC sur un tronçon donné ;
- ladite étape consistant à déterminer la consommation de carburant d'un véhicule routier comportant une seconde étape intermédiaire consistant à déterminer un coefficient de pénalisation local p(t,v) affectant la vitesse réelle du véhicule V sur un tronçon t ;
- ladite étape consistant à déterminer la consommation de carburant d'un véhicule routier comportant une troisième étape intermédiaire consistant à déterminer à l'aide de moyens de calcul la consommation corrigée Ccorr en fonction :

  - de la longueur du tronçon concernée lt ;
  - de la consommation à vitesse stabilisée sur ce tronçon Cstab ;
  - et du coefficient de pénalisation local p(t,v) pour ce tronçon ;

- lesdites étapes intermédiaires étant effectuées pour chaque tronçon t de chaque itinéraire potentiel Itipot et ladite méthode de calcul d'itinéraire comportant une étape de sélection, parmi les itinéraires potentiels Itipot, à l'aide d'un comparateur, d'un itinéraire à faible consommation ItiFC permettant d'optimiser la consommation de carburant du véhicule donné.

Afin de parfaire l'établissement d'itinéraires permettant de véritablement optimiser la consommation le procédé selon l'invention permet de prendre en compte les caractéristiques des tronçons influant sur la consommation. L'estimation de consommation est donc plus précise et, dans le contexte d'un choix d'itinéraire optimal, permet même de comparer la consommation d'un véhicule sur des tronçons appartenant au même type de voie.

De manière préférentielle, le réseau numérique comporte, en plus des tronçons, des noeuds, permettant, dans une représentation du réseau routier, de joindre entre eux une pluralité de tronçons.

Tous les détails de réalisation sont donnés dans la description qui suit, complétée par les figures 1 à 11, dans lesquelles :

- la figure 1 représente un diagramme illustrant les différentes phase ou étapes du procédé selon l'invention ;

- la figure 2 représente un diagramme illustrant les différentes phase ou étapes d'une variante de réalisation du procédé selon l'invention ;

- les figures 3 à 5 présentent des exemples d'itinéraires établis en fonction de différents critères : le plus rapide à la figure 3, le plus court à la figure 4, et celui à plus faible consommation de carburant, à la figure 5 ;

- les figures 6 à 11 illustrent un mode préférentiel permettant de déterminer un itinéraire en se basant sur l'algorithme de Dijkstra.

Dans la présente description, les termes suivants sont utilisés notamment avec les significations suivantes :

On désigne « noeud » un point d'intersection entre un premier élément de réseau cartographique ou routier (ou autre réseau) et un second élément d'un tel réseau, notamment l'intersection entre une pluralité de voies routières. Un noeud désigne également un point de changement physique ou qualitatif d'un tronçon, comme par exemple un passage de deux à trois voies, un changement de la limitation de vitesse, une zone (même temporaire) faisant l'objet de travaux, un point de rupture tel une frontière, etc.

On désigne « tronçon », une portion de voie entre deux noeuds.

On désigne un « itinéraire » un sous-ensemble de points issus des éléments de modélisation d'un réseau routier, créant un lien entre des données de façon à leur permettre de modéliser ou représenter un trajet ou parcours sur ledit réseau routier permettant de relier un point de départ et un point d'arrivée. Ce sous-ensemble est constitué par les données relatives aux tronçons permettant de relier le départ et l'arrivée. Par données relatives aux tronçons, on entend les identifications, les longueurs des tronçons et les coordonnées spatiales.

Ce sous-ensemble peut servir à représenter ledit itinéraire sous différentes formes, par exemple au moyen d'une représentation graphique, de préférence sous la forme d'une carte comprenant le point de départ, le point d'arrivée, et les tronçons formant ledit itinéraire, ou sous la forme d'une « feuille de route » ou liste d'instructions, comportant une énumération ou suite d'instructions écrites ou représentées par des pictogrammes, expliquant à un éventuel conducteur d'un véhicule, les différentes étapes à suivre pour effectuer ledit itinéraire.

On désigne « itinéraire potentiel » un des itinéraires possibles permettant de relier le point de départ et le point d'arrivée ;

On désigne «itinéraire retenu ou élu » l'itinérairet qui permet d'optimiser le trajet entre le point de départ et le point d'arrivée.

On désigne « voie » un espace aménagé pour faciliter les déplacements des véhicules d'un point à un autre (exemple : route, rue, etc.).

On désigne « type de voie » une classe de voies partageant des caractéristiques communes (exemple : autoroute, voie rapide, route nationale, route départementale, etc.)

On désigne « caractéristiques générales d'une voie » les éléments influant sur la circulation des véhicules sur l'ensemble de la voie. Exemples : type de voie, limite légale de vitesse par pays, importance de la voie.

On désigne « caractéristiques locales d'une voie » les éléments influant localement sur la circulation des véhicules. Exemples : limitations locales de vitesse, possibilité de doubler les véhicules plus lents, topologie de la route, importance de la localité où se trouve la voie.

On désigne « vitesse théorique » la vitesse moyenne de circulation des véhicules prenant en compte les caractéristiques générales de la voie.

On désigne « niveaux d'importance » les différents niveaux d'une échelle de classification des tronçons permettant de traiter, de trier et/ou de regrouper certains tronçons par ensemble similaires, en se basant sur la «taille» de la route sur laquelle se trouve le tronçon. On peut par exemple avoir une échelle d'importance 0 à 6, correspondant par exemple à :

0 = Route internationale (Europe) ou / routes nationales du réseau majeur ;
1= Autres routes nationales / routes inter-régions importantes ;
2=Autres routes inter-régions / Routes importantes à l'intérieur d'une même région ;
3=Autres routes à l'intérieur d'une même région / routes de liaisons entre villes ;
4=Autres routes départementales / routes de liaisons entre les quartiers ;
5 =Réseau local ;
6 =Réseau local d'importance mineure.

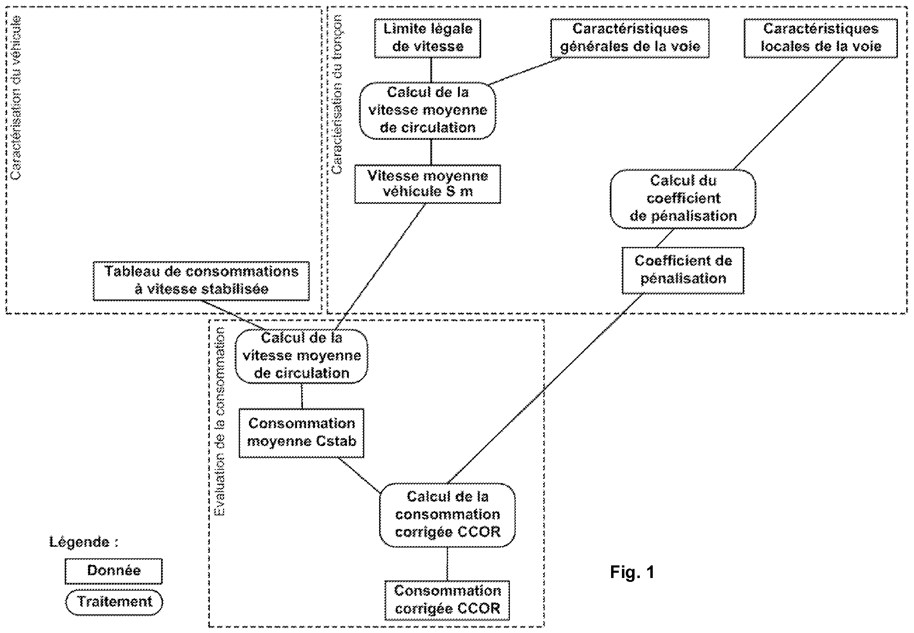

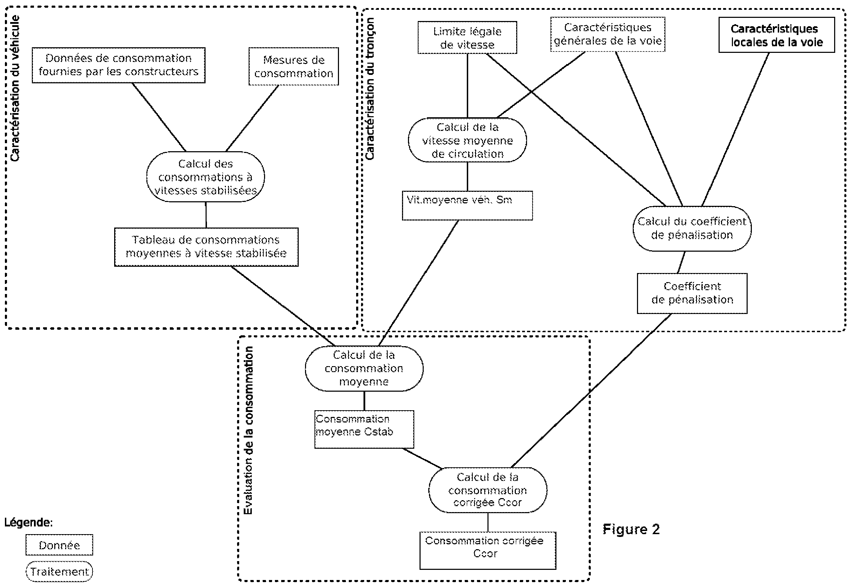

Les figures 1 et 2 permettent d'illustrer l'approche générale mise en oeuvre pour déterminer la consommation d'un véhicule le long d'un tronçon, cette approche pouvant être divisée en trois étapes:

- la caractérisation du véhicule ;
- la caractérisation du tronçon ;
- enfin, l'estimation de la consommation du véhicule sur le tronçon considéré.

Tout d'abord, en ce qui concerne la caractérisation du véhicule, deux approches sont possibles, soit par calcul, soit par mesure.

Dans le premier cas, pour chaque véhicule, les constructeurs publient des données de consommation dans des situations définies. Les plus fréquemment utilisées sont :

- la ville ;
- le cycle mixte ;
- la circulation extra-urbaine.

Or, le mode de calcul nécessite de connaître la consommation moyenne du véhicule à des vitesses stabilisées. Pour ce faire, deux types de données complémentaires sont mises en relation :

Tout d'abord, les données de consommation fournies par les constructeurs automobiles. Celles-ci sont définies pour différents environnements, à savoir autoroute, route et milieu urbain.

Ensuite, des données de consommation à vitesses stabilisées issues de mesures de consommation effectuées à des vitesses stabilisées sur un échantillon de véhicules de différentes cylindrées et à différents niveaux de vitesses correspondant au moins à celles des données des constructeurs, par exemple des vitesses de 120 km/h, 90km/h et 50km/h.

Le calcul de la consommation à vitesse stabilisée consiste à déduire un ou plusieurs coefficients (en fonction de la vitesse) en se basant sur une comparaison entre les mesures effectuées à vitesses stabilisées et les données des constructeurs. On applique ensuite ces coefficients à un ensemble plus vaste de données pour un plus grand nombre de véhicules par catégories, éventuellement provenant de différents constructeurs, de façon à obtenir un tableau de consommations à vitesses stabilisées pour un ensemble élargi de véhicules.

La valeur des coefficients peut varier selon les conditions de test, et selon les véhicules, et peut par ailleurs dépendre de la manière dont le constructeur a évalué la consommation de ses véhicules. La mise en relation de ces deux types de données et l'établissement de coefficients de correction permet d'obtenir des données globales permettant d'effectuer des calculs de consommation plus fiables et plus réalistes, compensant le fait que les données de consommation officielles sont souvent fournies pour des conditions de tests idéales, ne correspondant pas à la plupart des conditions de roulage habituelles.

Alternativement, pour les véhicules disposant d'ordinateurs de bord, la consommation à vitesse stabilisée peut également être obtenue par lecture directe de la consommation instantanée en circulant à une vitesse stable, connue avec précision, en ligne droite sur terrain plat.

Les paramètres généraux de la voie permettent de calculer une vitesse moyenne de circulation. On multiplie la limite légale de vitesse propre à chaque pays et à chaque catégorie de réseau (autoroute, voie rapide, route ordinaire...) par un coefficient dépendant entre autres des critères suivants :

- l'environnement urbain ou rural ;
- le nombre de voies par chaussée ;
- le type de chaussée (chaussées séparées, bretelle, rond-point, etc) ;
- l'importance et le caractère prioritaire de la route. Une route à grande circulation est prioritaire aux intersections, donc les véhicules qui y circulent consomment jusqu'à 50% de moins que s'ils circulaient sur une route de moindre importance donc non prioritaire.

Les paramètres locaux du tronçon peuvent aussi influer sur la consommation du véhicule. On attribue à chacun de ces paramètres un coefficient mesurant son impact sur l'augmentation de la consommation. A titre d'exemple, les paramètres locaux suivants peuvent être considérés :

- L'importance de la localité traversée (plus la localité est grande, plus la vitesse est variable, la vitesse moyenne basse et la consommation augmentée jusqu'à 50% pour les plus grandes localités) ;
- La signalisation (la consommation augmente avec le nombre de feux, stops, etc) ;
- La possibilité de doubler les véhicules lents (plus on peut doubler facilement, moins on consomme) ;
- La sinuosité de la route (la consommation augmente jusqu'à 20% avec la sinuosité) ;
- La déclivité (la consommation augmente jusqu'à 20% dans les côtes) ;
- Les limitations ponctuelles de vitesse (les variations de limite de vitesse augmentent la consommation dans la mesure où elles conduisent à des freinages et des accélérations) ;
- Le type de revêtement (la consommation est plus élevée de 50% sur une route non revêtue ou en mauvais état de 30%).

Le produit de ces coefficients (par exemple supérieurs ou égaux à 1) donne le coefficient de pénalisation du tronçon, noté p dans la suite de ce document.

Les figures 1 et 2 illustrent différents exemples de réalisation montrant différentes façons d'obtenir d'une part le coefficient p, et d'autre part les données de consommation à vitesse stabilisée. En effet, selon diverses variantes, le coefficient p peut être obtenu soit avec un seul paramètre, tel un paramètre local de voie (exemple de la figure 1), soit en combinant plusieurs paramètres, comme par exemple une ou plusieurs caractérisriques locales de voie, et/ou une ou plusieurs caractéristiques générales de voie, et/ou la limite légale de vitesse, comme dans l'exemple de la figure 2.

Connaissant la consommation du véhicule à trois vitesses stabilisées, la vitesse théorique de circulation du véhicule et le type de voie du tronçon, il est possible de calculer la consommation du véhicule circulant à la vitesse effective de cette voie. Pour ce faire, il est préférable de choisir la consommation à la vitesse stabilisée cstab la plus proche de la vitesse théorique.

Pour refléter les variations de vitesse du véhicule, il reste à appliquer le coefficient d'augmentation de consommation du tronçon et à le multiplier par la longueur du tronçon.

La consommation corrigée ccor d'un véhicule v sur un tronçon t est donc :

$$c_{cor}(t,v) = \frac{l(t)}{100} \times c_{stab}(v, s_m(t,v)) \times p(t,v)$$

Où:

- $l(t)$ est la longueur en kilomètres du tronçon $t$
- $c_{stab}(v, s)$ est la consommation en litres par 100km du véhicule $v$ à la vitesse stabilisée connue la plus proche de $s$,
- $s_m(t, v)$ est la vitesse moyenne en km/h au véhicule $v$ sur le tronçon $t$
- $p(t,v)$ est le coefficient de pénalisation de la consommation pour le véhicule $v$ sur le tronçon $t$.

On utilise de manière avantageuse l'algorithme de Dijkstra ou A* afin de déterminer les valorisations des différents noeuds et d'établir les itinéraires potentiels.

Comparons trois itinéraires en Belgique entre les villes de Leefdaal et Diest. Le premier est le plus rapide (minimisation du temps), le second le plus court (minimisation de la distance) et le dernier le plus économique (minimisation du coût de carburant). Pour illustrer notre invention, nous avons volontairement choisi une région où les autoroutes sont gratuites.

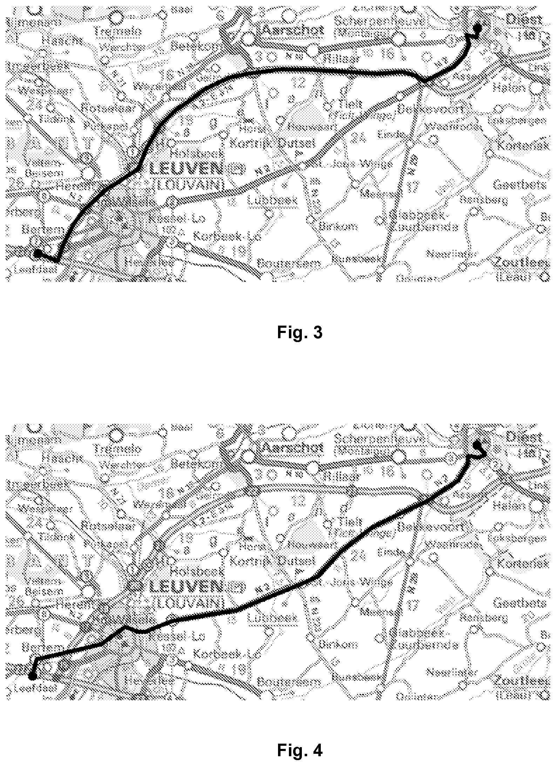

L'itinéraire le plus rapide passe par l'autoroute. La distance est de 43km en 32mn, pour 5.13€ de carburant. Cet itinéraire est représenté à la figure 3.

L'itinéraire le plus court traverse la ville puis prend la nationale. La distance est de 39km en 60mn, pour 5.16 € de carburant. Cet itinéraire est représenté à la figure 4.

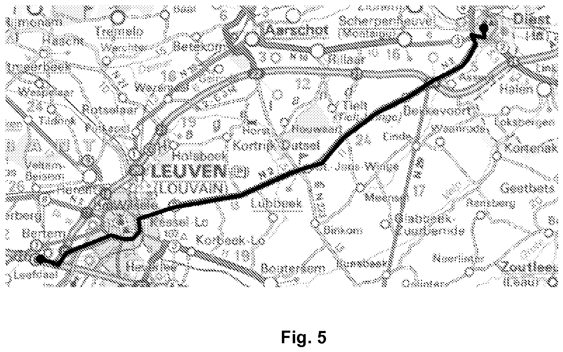

L'itinéraire économique contourne Louvain car les agglomérations pénalisent la consommation, puis prend la nationale, moins consommatrice que l'autoroute. La distance est de 40km en 54mn, pour 4.76€ de carburant. Cet itinéraire est représenté à la figure 5. Ces exemples sont basés sur les données suivantes : voiture familiale à moteur essence dont la consommation corrigée est de:

- 9 l/100km sur autoroute (vitesse stabilisée à 130km/h) ;

- 7.5 l/100km sur route (vitesse stabilisée à 90km/h) ;

- 8 l/100km en ville (vitesse stabilisée à 50km/h).

Le coût du carburant pour les exemples est de 1.30 Euros /litre.

Les données de consommation (l/100 km) du constructeur prises en compte, dans cet exemple un véhicule de type Peugeot 407 essence, sont les suivantes :

|  | 90 km/h | 120 km/h | cycle urbain |
|---|---|---|---|
| Peu 407 2006 1,4 16V 90 ch ess 6 cv | 7,2 | 8,7 | 8,9 |
| Peu 407 2006 1,6 16V 110 ch ess 7 cv | 7,7 | 9,4 | 10,0 |

Les consommations à 90 et 120 sont à vitesse stabilisée. Celle dite 'cycle urbain' n'est pas à vitesse stabilisée.

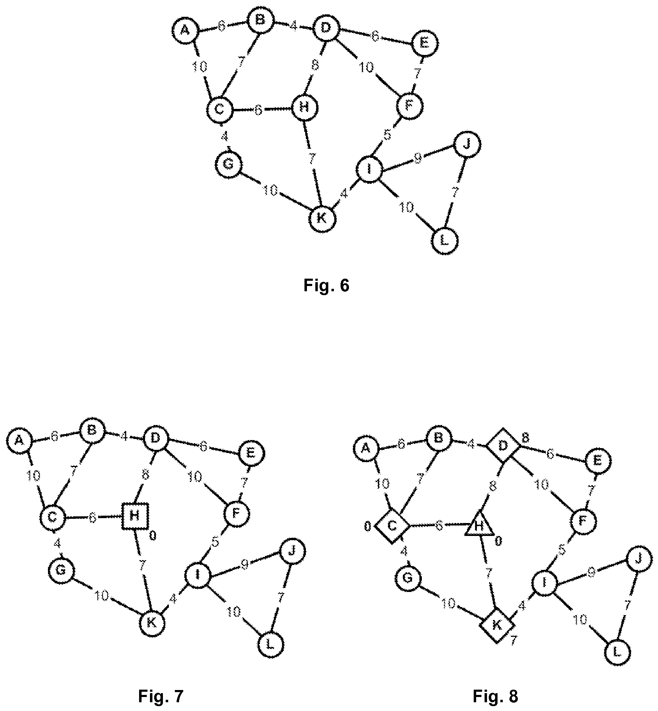

Les figures 6 à 11 illustrent le procédé de détermination d'itinéraire utilisant l'approche de Dijkstra. En fait, différentes approches ainsi que différents algorithmes permettent aujourd'hui de procéder à des calculs d'itinéraires. La présente invention est susceptible d'être utilisées avec un grand nombre d'entre elles. Par exemple, le procédé selon l'invention convient particulièrement à l'algorithme de Dijkstra.

Selon une variante avantageuse de cette approche, on identifie une pluralité de routes potentielles à partir desquelles un itinéraire est élu en fonction de critères donnés, l'identification de la pluralité de routes étant effectuée en sélectionnant un premier élément de modélisation du réseau routier, de préférence un noeud, à proximité du point de départ, et un second élément de modélisation du réseau routier, de préférence un noeud, à proximité du point d'arrivée, en identifiant une pluralité de routes, chacune consistant en une pluralité d'éléments de route reliés du premier élément au second élément, et en recherchant au moins un élément intermédiaire pour chacune desdites routes dans ledit ensemble d'éléments de modélisation de réseau routier..

Les figures 6 à 11 permettent d'illustrer un tel principe. Soit un graphe, tel que celui de la figure 6, représentant le réseau routier, comportant des noeuds reliés entre eux par des tronçons valorisés (distance entre les noeuds) :

On choisit un point de départ (par exemple H) ; l'algorithme de Dijkstra permet de connaître pour chaque noeud la distance la plus courte entre ce noeud et H. Les figures 6 à 11 permettent d'illustrer le fonctionnement de l'algorithme :

Première étape (figure 7) : on valorise à 0 le noeud de départ.

Deuxième étape (figure 8) : on emprunte chaque tronçon quittant le départ et on valorise les noeuds rencontrés.

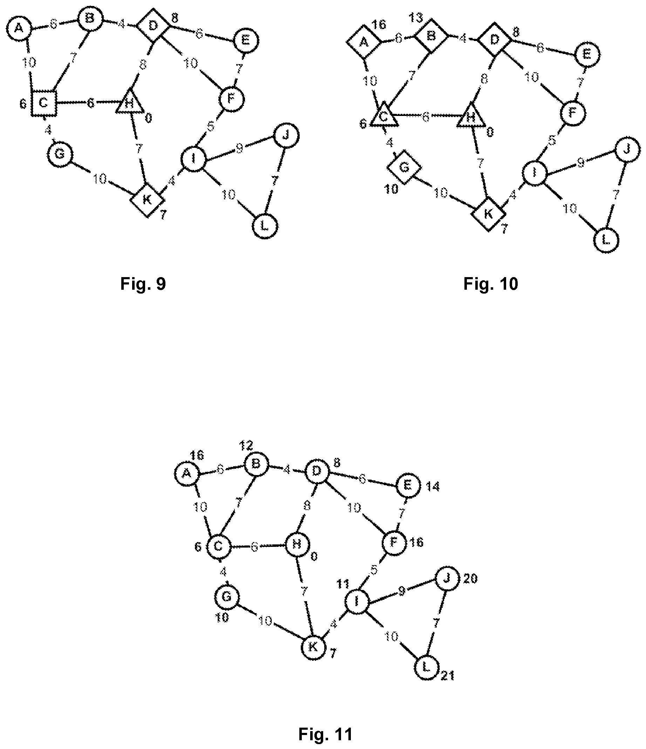

Troisième étape (figure 9) : on sélectionne, parmi les noeuds valorisés, celui dont la valorisation est la plus faible.

Quatrième étape (figure 10): on emprunte tous les tronçons partant du point sélectionné, dans cet exemple, il s'agit du point C, puis on valorise les noeuds rencontrés A, B et G (première valorisation ou réactualisation).

Ainsi de suite, on sélectionnera ensuite K, celui qui a la seconde valorisation, puis, au fur et à mesure, tous les noeuds. Tant qu'un noeud n'est pas définitivement évalué, sa valorisation peut changer. Par exemple, B sera valorisé à 12 via D. A la fin, on obtient le résultat présenté à la figure 11.

Pour le calcul d'itinéraires, on part du point de départ -dans cet exemple, le point H- et on s'arrête dès que le noeud d'arrivée est définitivement évalué. On a ainsi obtenu le meilleur itinéraire. Afin de calculer différents types d'itinéraires possibles, la valorisation associée au tronçon peut dépendre de différents paramètres tels que par exemple :

- le temps de parcours (itinéraire le plus rapide) ;
- la longueur (itinéraire le plus court) ;
- ou une combinaison des deux.

Selon l'invention, afin de valoriser les tronçons, on utilise de préférence la consommation du véhicule pour ce tronçon.

**Revendications**

**1.** Procédé de détermination d'un itinéraire à faible consommation ItiFC pour système de réseau routier numérique stocké sur un support mémoire et comportant une pluralité de tronçons et d'indications de positionnement de ces tronçons, lesdits tronçons étant susceptibles d'être agencés dans une reconstitution d'un réseau routier de façon à former des portions de routes et des carrefours, ledit procédé permettant de déterminer au moins un itinéraire potentiel Itipot, susceptible de relier un point de départ D, et un point d'arrivée A, ledit itinéraire étant constitué de tronçons et éventuellement de noeuds, lesdits tronçons reliant lesdits noeuds :

- ledit procédé comprenant les étapes consistant à:

  - identifier une pluralité de routes potentielles Rpot à partir desquelles un itinéraire est susceptible d'être élu en fonction de critères de sélection de route donnés, chaque route potentielle étant constituée d'un ensemble de tronçons comportant chacun un indice de poids dont la valeur dépend du niveau de pénalisation apporté par ledit tronçon dans la constitution de l'itinéraire en fonction desdits critères ;
  - élire, parmi l'ensemble des routes potentielles Rpot, l'itinéraire dont la valorisation résultante en fonction des indices de poids est optimale ;
  - ledit procédé comportant en outre une étape consistant à déterminer la consommation de carburant d'un véhicule routier à l'aide de moyens de calculs en fonction des données correspondant aux caractéristiques techniques du véhicule, à des mesures de consommation effectuées sur une pluralité de véhicules types, et à des caractéristiques physiques des tronçons de l'itinéraire ;

  **caractérisé en ce que** ladite étape consistant à déterminer la consommation de carburant d'un véhicule routier comporte trois étapes intermédiaires :

  - la première étape intermédiaire consistant à déterminer à l'aide de moyens de calculs la consommation moyenne à vitesse stabilisée Cstab établie d'une part à l'aide de données de consommation théoriques et d'autre part de données obtenues par des mesures de consommation à différentes vitesses stabilisées, ladite consommation à vitesse stabilisée étant établie en fonction de la vitesse moyenne de circulation VMC sur un tronçon donné ;
  - la seconde étape intermédiaire consistant à déterminer un coefficient de pénalisation locale P(t,v) affectant la vitesse réelle V sur un tronçon t ;
  - la troisième étape intermédiaire consistant à déterminer à l'aide de moyens de calcul la consommation corrigée Ccor en fonction de la longueur du tronçon concerné It, de la consommation à vitesse stabilisée sur ce tronçon Cstab, et du coefficient de pénalisation locale P(t,v) pour ce tronçon ;
  - ledit coefficient de pénalisation prenant en compte l'ensemble des paramètres physiques suivants :

    o le niveau d'importance de la localité traversée de sorte que plus la localité est grande, plus la consommation augmente ;
    o la signalisation, de sorte que la consommation augmente avec le nombre de feux et de stops ;
    o la possibilité de doubler les véhicules lents, de sorte que la présence de zones de dépassement diminue la consommation ;
    o la sinuosité de la route, de sorte que la consommation augmente avec la sinuosité ;

o la déclivité, de sorte que la consommation augmente avec la déclivité ;

o les limitations ponctuelles de vitesse, de sorte que les variations de limites de vitesse augmentent la consommation ;

o le type de revêtement, de sorte que la consommation augmente sur une route non revêtue ou en mauvais état ;

lesdites étapes intermédiaires étant effectuées pour chaque tronçon t de chaque route potentielle Rpot pendant le calcul d'itinéraire, la donnée obtenue de consommation corrigée Ccorr étant utilisée pour affecter à chaque tronçon ledit indice de poids correspondant à l'impact de ce tronçon sur la consommation du véhicule, de façon à obtenir, lors de l'étape consistant à élire l'itinéraire résultant, un itinéraire à faible consommation ItiFC prenant en compte la consommation corrigée Ccorr.

2.  Procédé de détermination d'itinéraires selon la revendication 1, dans lequel la consommation corrigée du véhicule sur un tronçon t est définie par la relation :

$$c_{est}(t,v) = \frac{l(t)}{100} \times c_{stab}(v, s_m(t,v)) \times p(t,v)$$

Où:

- $l(t)$ est la longueur en kilomètres du tronçon $t$
- $c_{stab}(v, s)$ est la consommation en litres par 100km du véhicule $v$ à la vitesse stabilisée connue la plus proche de $s$,
- $s_m(t, v)$ est la vitesse moyenne en km/h au véhicule $v$ sur le tronçon $t$
- $p(t,v)$ est le coefficient de pénalisation de la consommation pour le véhicule $v$ sur le tronçon t.

3.  Procédé de détermination d'itinéraires selon l'une des revendications 1 ou 2, dans lequel la consommation moyenne à vitesse stabilisée du véhicule est déterminée en affectant un coefficient de correction de véhicule COEFVE aux données théoriques de consommation DTC du véhicule, ledit coefficient étant obtenu grâce à des mesures préalables de consommation effectuées à vitesse stabilisée.

4.  Procédé de détermination d'itinéraires selon l'une des revendications précédentes, dans lequel le calcul de consommations à vitesse stabilisée permet d'établir un tableau de consommations moyennes à vitesse stabilisé, la consommation moyenne à vitesse stabilisée Cstab étant déterminée en affectant à la valeur de vitesse moyenne de circulation déterminée la valeur correspondante la plus proche disponible dans ledit tableau de consommations moyennes.

5.  Procédé de détermination d'itinéraires selon l'une des revendications précédentes, dans lequel la vitesse moyenne de circulation VMC est déterminée à l'aide de moyens de calculs en fonction de la limite légale de vitesse LLV et des caractéristiques générales de la voie CG.

6.  Procédé de détermination d'itinéraires selon l'une des revendications précédentes, dans lequel afin de déterminer un itinéraire potentiel Itipot, on identifie une pluralité de routes potentielles Rpot à partir desquelles un itinéraire est élu en fonction de critères donnés, l'identification de la pluralité de routes étant effectuée par exploration des noeuds et/ou des tronçons à partir d'un premier élément de modélisation donné par un utilisateur, jusqu'à ce que ladite pluralité de routes passe par un second élément de modélisation sélectionné par l'utilisateur.

7.  Procédé de détermination d'itinéraires selon l'une des revendications précédentes, dans lequel afin de déterminer un itinéraire potentiel Itipot, on identifie une pluralité de routes potentielles Rpot à partir desquelles un itinéraire est élu en fonction de critères donnés, l'identification de la pluralité de routes étant effectuée par exploration des noeuds et/ou des tronçons en sélectionnant un premier élément de modélisation du réseau routier, de préférence un noeud, à proximité du point de départ (D), et un second élément de modélisation du réseau routier, de préférence un noeud, à proximité du point d'arrivée (A), en identifiant une pluralité de routes, chacune consistant en une pluralité d'éléments de route reliés du premier élément au second élément, et en recherchant au moins un élément intermédiaire pour chacune desdites routes dans ledit ensemble d'éléments de modélisation de réseau routier.

8. Logiciel comprenant des éléments de code programmés pour la mise en oeuvre du procédé selon l'une des revendications précédentes, lorsque ledit logiciel est chargé dans un système informatique et exécuté par ledit système informatique.

9. Logiciel selon la revendication 8, sous forme de produit enregistré sur un support lisible par un système informatique, comprenant des éléments de code programmés.

**Patentansprüche**

1. Verfahren zum Bestimmen einer Route mit niedrigem Verbrauch ItiFC für ein digitales Straßennetzsystem, das auf einem Speichermedium gespeichert ist und mehrere Strecken und Positionsangaben dieser Strecken aufweist, wobei die Strecken geeignet sind, in einer Rekonstruktion eines Straßennetzes derart angeordnet zu werden, um Streckenabschnitte und Kreuzungen zu bilden, wobei das Verfahren ermöglicht, mindestens eine potentielle Route Itipot zu bestimmen, die geeignet ist, einen Ausgangspunkt D und einen Ankunftspunkt A zu verbinden, wobei die Route aus Strecken und eventuell aus Knoten gebildet ist, wobei die Strecken die Knoten verbinden:

   • wobei das Verfahren die Schritte aufweist, die darin bestehen:
   • mehrere potentielle Wege Rpot zu identifizieren, von denen ausgehend eine Route in Abhängigkeit von bestimmten Wegauswahlkriterien ausgewählt werden kann, wobei jeder potentielle Weg aus einer Anordnung von Strecken gebildet wird, die jeweils einen Gewichtsindex aufweisen, dessen Wert von dem Grad der Benachteiligung abhängt, der von dem Abschnitt bei der Erstellung der Route in Abhängigkeit von den Kriterien gebracht wird,
   • aus der Anordnung der potentiellen Wege Rpot die Route zu wählen, deren resultierende Bewertung in Abhängigkeit von den Gewichtsindexen optimal ist,
   • wobei das Verfahren ferner einen Schritt aufweist, der darin besteht, den Kraftstoffverbrauch eines Straßenfahrzeugs mit Hilfe von Berechnungsmitteln in Abhängigkeit von den Daten zu berechnen, die den technischen Eigenschaften des Fahrzeugs, Verbrauchsmessungen, die an mehreren Standardfahrzeugen durchgeführt worden sind, und physikalischen Eigenschaften der Strecken der Route entsprechen,

   **dadurch gekennzeichnet, dass** der Schritt, der darin besteht, den Kraftstoffverbrauch eines Straßenfahrzeugs zu bestimmen, drei Zwischenschritte aufweist:

   • den ersten Zwischenschritt, der darin besteht, mit Hilfe von Berechnungsmitteln den durchschnittlichen Verbrauch bei konstanter Geschwindigkeit Cstab zu bestimmen, der einerseits mit Hilfe von theoretischen Verbrauchsdaten und andererseits mit Daten festgelegt wird, die durch Verbrauchsmessungen bei verschiedenen konstanten Geschwindigkeiten erhalten werden, wobei der Verbrauch bei konstanter Geschwindigkeit in Abhängigkeit von der durchschnittlichen Fahrgeschwindigkeit VMC auf einer bestimmten Strecke festgelegt wird,
   • den zweiten Zwischenschritt, der darin besteht, einen lokalen Benachteiligungskoeffizienten P(t,v) zu bestimmen, der die tatsächliche Geschwindigkeit V auf der Strecke t beeinflusst,
   • den dritten Zwischenschritt, der darin besteht, mit Hilfe von Berechnungsmitteln den korrigierten Verbrauch Ccor in Abhängigkeit von der Länge der betreffenden Strecke lt, dem Verbrauch bei konstanter Geschwindigkeit Cstab und dem lokalen Benachteiligungskoeffizienten P(t,v) für diese Strecke zu bestimmen,
   • wobei der Benachteiligungskoeffizient die Gesamtheit der folgenden physikalischen Parameter berücksichtigt:

      o den Grad des Ausmaßes des durchfahrenen Ortes derart, dass der Verbrauch steigt, je größer der Ort ist,
      o die Signalisierung, derart, dass der Verbrauch mit der Anzahl der Ampeln und der Stoppschilder steigt,
      o die Möglichkeit, langsame Fahrzeuge zu überholen, derart, dass die Anwesenheit von Überholbereichen den Verbrauch senkt,
      o die Kurvigkeit des Wegs, derart, dass der Verbrauch mit der Kurvigkeit steigt,
      o das Gefälle, derart, dass der Verbrauch mit dem Gefälle steigt,
      o die punktuellen Geschwindigkeitsbeschränkungen, derart, dass die Variationen der Geschwindigkeitsbeschränkungen den Verbrauch erhöhen,
      o die Art des Belags, derart, dass der Verbrauch auf einer nicht asphaltieren oder schlechten Straße steigt,

   wobei die Zwischenschritte für jede Strecke t von jedem potentiellen Weg Rpot beim Berechnen der Route durchgeführt werden, wobei das erhaltene Datum des korrigierten Verbrauchs Ccorr verwendet wird, um jeder Strecke den Gewichtindex zuzuweisen, der der Auswirkung dieser Strecke auf den Verbrauch des Fahrzeugs entspricht, derart, um bei dem Schritt, der darin besteht die resultierende Route auszuwählen, eine Route mit niedrigem Verbrauch ItiFC zu erhalten, die den korrigierten Verbrauch Ccorr berücksichtigt.

2. Verfahren zum Bestimmen von Routen nach Anspruch 1, wobei der korrigierte Verbrauch des Fahrzeugs auf einer Strecke t durch die Beziehung definiert ist:

$$c_{est}(t,v) = \frac{l(t)}{100} \times c_{stab}(v, s_m(t,v)) \times p(t,v)$$

wobei:

- $l(t)$ die Länge der Strecke t in Kilometern ist
- $c_{stab}(v, s)$ der Verbrauch des Fahrzeugs $v$ in Litern pro 100 km bei der bekannten konstanten Geschwindigkeit ist, die s am nächsten ist,
- $s_m(t,v)$ die durchschnittliche Geschwindigkeit in km/h an dem Fahrzeug $v$ auf der Strecke t ist
- $p(t,v)$ der Benachteiligungskoeffizient des Verbrauchs für das Fahrzeug $v$ auf der Strecke $t$ ist.

3. Verfahren zum Bestimmen von Routen nach einem der Ansprüche 1 oder 2, wobei der durchschnittliche Verbrauch bei konstanter Geschwindigkeit des Fahrzeugs bestimmt wird, indem den theoretischen Verbrauchsdaten DTC des Fahrzeugs ein Fahrzeugkorrekturkoeffizient COEFVE zugewiesen wird, wobei der Koeffizient durch vorherige Verbrauchsmessungen erhalten wird, die bei konstanter Geschwindigkeit durchgeführt werden.

4. Verfahren zum Bestimmen von Routen nach einem der vorhergehenden Ansprüche, wobei das Berechnen von Verbräuchen bei konstanter Geschwindigkeit ermöglicht, eine Tabelle von durchschnittlichen Verbräuchen bei konstanter Geschwindigkeit zu erstellen, wobei der durchschnittliche Verbrauch bei konstanter Geschwindigkeit Cstab bestimmt wird, indem dem bestimmten Wert der durchschnittlichen Fahrgeschwindigkeit der nächste entsprechende Wert zugewiesen wird, der in der Tabelle von durchschnittlichen Verbräuchen verfügbar ist.

5. Verfahren zum Bestimmen von Routen nach einem der vorhergehenden Ansprüche, wobei die durchschnittliche Fahrgeschwindigkeit VMC mit Hilfe von Berechnungsmitteln in Abhängigkeit von der gesetzlichen Höchstgeschwindigkeit LLV und den allgemeinen Eigenschaften der Straße CG bestimmt wird.

6. Verfahren zum Bestimmen von Routen nach einem der vorhergehenden Ansprüche, wobei, um eine potentielle Route Itipot zu bestimmen, mehrere potentielle Wege Rpot identifiziert werden, von denen ausgehend eine Route in Abhängigkeit von bestimmten Kriterien ausgewählt wird, wobei das Identifizieren der mehreren Wege durch Erkunden der Knoten und/oder der Strecken ausgehend von einem ersten Modellelement, das durch einen Benutzer gegeben wird, durchgeführt wird, bis die mehreren Wege ein zweites Modellelement durchlaufen, das von dem Benutzer gewählt wird.

7. Verfahren zum Bestimmen von Routen nach einem der vorhergehenden Ansprüche, wobei, um eine potentielle Route Itipot zu bestimmen, mehrere potentielle Wege Rpot identifiziert werden, von denen ausgehend eine Route in Abhängigkeit von bestimmten Kriterien ausgewählt wird, wobei das Identifizieren der mehreren Wege durch Erkunden der Knoten und/oder der Strecken durchgeführt wird, indem ein erstes Modellelement des Straßennetzes, vorzugsweise ein Knoten, in der Nähe des Ausgangspunktes (D) und ein zweites Modellelement des Straßennetzes, vorzugsweise ein Knoten, in der Nähe des Ankunftspunktes (A) ausgewählt wird, indem mehrere Wege identifiziert werden, wobei jeder aus mehreren Wegelementen besteht, die von dem ersten Element zu dem zweiten Element verbunden werden, und indem mindestens ein Zwischenelement für jeden dieser Wege in der Gesamtheit von Modellelementen des Straßennetzes ausgewählt wird.

8. Software, die programmierte Codeelemente zum Umsetzen des Verfahrens nach einem der vorhergehenden Ansprüche aufweist, wenn die Software in ein Computersystem geladen ist und von dem Computersystem ausgeführt wird.

9. Software nach Anspruch 8 in Form eines Produktes, das auf einem computersystemlesbaren Medium aufgezeichnet ist, das programmierte Codeelemente aufweist.

**Claims**

1. Method for determining a low fuel consumption itinerary ItiFC for a digital road network system stored on a memory support and comprising a plurality of segments and of indications as to the positioning of these segments, the said segments being able to be arranged in a reconstruction of a road network so as to form route portions and intersections, the said method making it possible to determine at least one potential itinerary Itipot capable of connecting a departure point D and an arrival point A, the said itinerary being made up of segments and possibly nodes, the said segments connecting the said nodes:

   • the said method comprising the steps consisting in:
   • identifying a plurality of potential routes Rpot from which an itinerary can be chosen on the basis of given route selection criteria, each potential route being made up of a collection of segments each comprising a weighting index the value of which is dependent on the level of penalty afforded by the said segment when making up the itinerary on the basis of the said criteria;
   • selecting, from the collection of potential routes Rpot, the itinerary which, on the basis of the weighting indexes, works out as representing the best value;
   • the said method further comprising a step that consists in determining the fuel consumption of a road vehicle using calculation means on the basis of the data corresponding to the technical characteristics of the vehicle, to consumption measurements taken on a plurality of typical vehicles, and to physical characteristics of the segments of the itinerary;

   **characterized in that** the said step which consists in determining the fuel consumption of a road vehicle comprises three intermediate steps:

   • the first intermediate step consisting in using calculation means to determine the mean consumption at stabilized speed Cstab established on the one hand using theoretical consumption data and, on the other hand, using data obtained by measuring consumption at various stabilized speeds, the said consumption at stabilized speed being established on the basis of the average driving speed VMC on a given segment;
   • the second intermediate step consisting in determining a local penalty coefficient P(t,v) that affects the true speed V in a segment t;
   • the third intermediate step consisting in using calculation means to determine the corrected consumption Ccor on the basis of the length of the relevant segment lt, the consumption at stabilized speed in this segment Cstab, and the local penalty coefficient P(t,v) for this segment;
   • the said penalty coefficient taking account of all of the following physical parameters:

     o the importance of the location being crossed, such that the more major the location, the more the consumption increases;
     o the signing, such that the consumption increases with the number of traffic lights and stop signs;
     o the possibility of overtaking slow vehicles, such that the presence of overtaking zones reduces the consumption;
     o the sinuosity of the route, such that the consumption increases with the sinuosity;
     o the gradient, such that the consumption increases with the gradient;
     o localized speed limits, such that variations in speed limit increase the consumption;
     o the type of road surface, such that the consumption increases on an unmade road or a road in poor condition;

   the said intermediate steps being performed for each segment t of each potential route Rpot during the itinerary calculation, the corrected consumption data item Ccorr obtained being used to assign to each segment the said weighting index that corresponds to the impact that this segment has on the consumption of the vehicle so that during the step that consists in selecting the resultant itinerary a low consumption itinerary ItiFC that takes the corrected consumption Ccorr into consideration can be obtained.

2. Method for determining itineraries according to Claim 1, in which the corrected consumption of the vehicle on a segment t is defined by the relationship:

**13**

$$c_{cor}(t,v) = \frac{l(t)}{100} \times c_{stab}(v, s_m(t,v)) \times p(t,v)$$

where:

- $l(t)$ is the length of the segment $t$ in kilometres
- $c_{stab}(v,s)$ is the consumption of the vehicle $v$ in litres per 100 km at the known stabilized speed closest to $s$,
- $s_m(t,v)$ is the average speed of the vehicle $v$ in km/h on the segment $t$
- $p(t,v)$ is the consumption penalty coefficient for the vehicle $v$ in the segment $t$.

3. Method for determining itineraries according to one of Claims 1 and 2, in which the mean consumption of the vehicle at stabilized speed is determined by assigning a vehicle correction coefficient COEFVE to the vehicle theoretical consumption data DTC, the said coefficient being obtained through prior consumption measurements taken at stabilized speed.

4. Method for determining itineraries according to one of the preceding claims, in which calculating consumptions at stabilized speed makes it possible to establish a table of mean consumptions at stabilized speed, the mean consumption at stabilized speed Cstab being determined by assigning to the determined average driving speed value the closest corresponding value available in the said mean consumptions table.

5. Method for determining itineraries according to one of the preceding claims, in which the average driving speed VMC is determined using calculation means on the basis of the legal speed limit LLV and of the general roadway characteristics CG.

6. Method for determining itineraries according to one of the preceding claims, in which in order to determine a potential itinerary Itipot, a plurality of potential routes Rpot is identified and from these one itinerary is selected on the basis of given criteria, the identification of the plurality of routes being performed by exploration of the nodes and/or segments starting from a first modelling element given by a user, until such point as the said plurality of routes passes through a second modelling element selected by the user.

7. Method for determining itineraries according to one of the preceding claims, in which in order to determine a potential itinerary Itipot, a plurality of potential routes Rpot is identified and from these one itinerary is selected on the basis of given criteria, the identification of the plurality of routes being performed by exploration of the nodes and/or of the segments by selecting a first road network modelling element, preferably a node, near the departure point (D), and a second road network modelling element, preferably a node, near the arrival point (A), by identifying a plurality of routes, each one made up of a plurality of route elements connected from the first element to the second element, and by searching for at least one intermediate element for each of the said routes from among the said collection of road network modelling elements.

8. Software comprising code elements programmed to implement the method according to one of the preceding claims, when the said software is loaded into a computer system and executed by the said computer system.

9. Software according to Claim 8, in the form of a product recorded on a support that is readable by a computer system, comprising programmed code elements.

Fig. 1

**Fig. 3**

**Fig. 4**

**Fig. 5**

**Fig. 6**

**Fig. 7**

**Fig. 8**

Fig. 9

Fig. 10

Fig. 11

Caractérisation du véhicule

Données de consommation fournies par les constructeurs

Mesures de consommation

Calcul des consommations à vitesses stabilisées

Tableau de consommations moyennes à vitesse stabilisée

Caractérisation du tronçon

Limite légale de vitesse

Caractéristiques générales de la voie

**Caractéristiques locales de la voie**

Calcul de la vitesse moyenne de circulation

Vit.moyenne véh. Sm

Calcul du coefficient de pénalisation

Coefficient de pénalisation

Evaluation de la consommation

Calcul de la consommation moyenne

Consommation moyenne Cstab

Calcul de la consommation corrigée Ccor

Consommation corrigée Ccor

Légende:

Donnée

Traitement

Figure 2

## RÉFÉRENCES CITÉES DANS LA DESCRIPTION

**Documents brevets cités dans la description**

- US 5568390 A
- US 5913917 A
- JP 2000002553 B